(19) Europäisches Patentamt
European Patent Office
Office européen des brevets

(11) **EP 3 208 511 B1**

(12) **EUROPÄISCHE PATENTSCHRIFT**

(45) Veröffentlichungstag und Bekanntmachung des Hinweises auf die Patenterteilung:
**09.05.2018 Patentblatt 2018/19**

(21) Anmeldenummer: **17156037.8**

(22) Anmeldetag: **14.02.2017**

(51) Int Cl.:
*F16P 3/14* (2006.01)     *G01D 5/34* (2006.01)
*G01S 17/02* (2006.01)     *G01S 17/93* (2006.01)
*G01V 8/20* (2006.01)      *G05D 1/02* (2006.01)
*G01S 17/87* (2006.01)

(54) **VORRICHTUNG ZUM ÜBERWACHEN DES ÜBERWACHUNGSBEREICHS EINES FÜHRERLOSEN FAHRZEUGS**

DEVICE FOR MONITORING A MONITORED AREA OF A DRIVERLESS VEHICLE

DISPOSITIF DE SURVEILLANCE D'UNE ZONE DE SURVEILLANCE D'UN VÉHICULE SANS CONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2016 DE 102016103028**

(43) Veröffentlichungstag der Anmeldung:
**23.08.2017 Patentblatt 2017/34**

(73) Patentinhaber: **Sick AG**
**79183 Waldkirch (DE)**

(72) Erfinder:
• **Hammes, Markus**
**79117 Freiburg (DE)**
• **Sigmund, Jörg**
**79100 Freiburg (DE)**

(56) Entgegenhaltungen:
EP-A1- 1 962 105          DE-A1-102005 049 159
DE-A1-102008 050 943      DE-A1-102012 006 347

**Beschreibung**

Die vorliegende Erfindung betrifft eine Vorrichtung nach dem Oberbegriff von Anspruch 1.

Derzeit werden Laserscanner oder auch Lichtgitter zur Gefahrbereichsüberwachung eingesetzt. Weiter ist es üblich, sogenannte mechanische "Bumper" an Fahrzeugen zu installieren, die ansprechen, wenn das Fahrzeug ein Hindernis berührt. Ein Bumper ist ein mechanischer Berührungsschalter, der an der Außenkontur des Fahrzeuges angeordnet ist.

Bumper sind teuer, arbeiten nicht kontaktfrei und sind nur für Anwendungen mit quasi sehr kurzen Reichweiten beschränkt.

Laserscanner sind ebenfalls teuer und für viele moderne Kleinstfahrzeuge zu groß. Beide Lösungen sind nicht flexibel einsetzbar, was jedoch bei Kleinfahrzeugen zunehmend erforderlich wird.

Beispielsweise offenbart die DE 10 2005 049 159 A1 ein Verfahren zum Überwachen eines Umgebungsbereichs eines Fahrzeugs.

Die DE 195 12 681 A1 offenbart eine Sicherheitseinrichtung für Fahrzeuge.

Eine Aufgabe der Erfindung besteht darin, eine kostengünstige und flexibel einsetzbare Vorrichtung bereitzustellen zur Überwachung von Überwachungsbereichen.

Die Aufgabe wird gemäß Anspruch 1 gelöst durch eine Vorrichtung zum sicheren Überwachen eines Überwachungsbereichs eines beweglichen Teils bei einer Bewegung des Teils in Bewegungsrichtung, mit mehreren Sensoren, und mit einer Auswerteeinheit zum Auswerten der Sensoren, wobei die Sensoren quer zur Bewegungsrichtung beabstandet zueinander angeordnet sind, wobei die Sensoren ein flächiges Schutzfeld bilden, welches sich über die Breite des Teils erstreckt, wobei die Sensoren berührungslos wirkende abstandsmessende Sensoren sind, wobei die Sensoren einen Detektionsstrahl zum Erfassen von Objekten im Überwachungsbereich aufweisen und die Detektionsstrahlen der Sensoren in einem spitzen Winkel zur Bewegungsrichtung des Teils angeordnet sind, wobei die Sensoren Lichtlaufzeitsensoren sind, wobei das bewegliche Teil ein führerloses Transportfahrzeug ist, wobei die Bewegung die Fahrzeugbewegung ist und die Bewegungsrichtung die Fahrzeugbewegungsrichtung ist.

Sicherheit ist gemäß vorliegender Erfindung Sicherheit im Sinne von Maschinensicherheit. Beispielsweise regelt die Norm EN/IEC 61496 die Anforderungen an einen sicheren Sensor bzw. eine sichere berührungslos wirkende Schutzeinrichtung (BWS) zur Absicherung von Gefahrenbereichen. Maschinensicherheit ist in der Norm EN13849 geregelt. Die Sicherheit wird beispielsweise durch einen zweikanaligen oder zweikanalig diversitären Aufbau einer Auswerteeinheit zur Fehleraufdeckung und zur Funktionsprüfung gewährleistet. Der abstandsmessende Sensor bzw. Distanzsensor gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt der Sensor bzw. Distanzsensor optional über eine Sensortestung.

Die Auswerteeinheit erkennt Schutzfeldverletzungen und kann ein sicherheitsgerichtetes Abschaltsignal ausgeben, um eine gefahrbringende Bewegung des Teils zu stoppen bzw. das Teil abzubremsen. Das kann z. B. über sichere Schaltsignale z.B. OSSD-Signale (Output Safety Switching Device-Signale) oder sichere Distanzdaten, Abstandsdaten bzw. sichere Ortsdaten des Eingriffsereignisses realisiert werden. Beispielsweise ist die Auswerteeinheit zweikanalig ausgebildet.

Die Überwachung erfolgt mit einer Anzahl einfacher, eindimensional tastender Distanzmesssensoren unter Ausnutzung der Bewegung des Teils und einer Ausrichtung der Sensoren, bei der die Tastrichtung in einem Winkel zur Bewegungsrichtung des Teils steht.

Unter der Annahme, dass ein Eingriff in das Schutzfeld nur in Richtung der Ebene des Schutzfeldes erfolgt und nicht quer zum Schutzfeld, stellt die Vorrichtung sicher, dass ein definiertes Objekt, beispielsweise ein Bein immer und spätestens nach dem Zurücklegen einer bestimmten Strecke des Teils detektiert wird. Diese Strecke kann als Bremszone definiert werden. Die Sensoren sind dabei bevorzugt in einem Winkel zu einer Seitenfläche des Fahrzeuges ausgerichtet.

Aufgrund des Winkels zwischen Detektionsstrahl und Bewegungsrichtung verschiebt sich der Taststrahl bei Annäherung des Teils seitlich relativ zu einem statischen Objekt im Überwachungsbereich. Die Detektionsstrahlen sind dabei parallel zueinander angeordnet.

Vom Eintreten eines Objektes in die Bremszone bis zum Erreichen des Schutzfeldes wird je nach Neigungswinkel ein Lateralbereich vom Detektionsstrahl überstrichen. Eine Anordnung von Taststrahlen, die innerhalb des Bewegungsweges, der der Länge der Bremszone entspricht, einen Lateralbereich überstreicht, der höchstens noch nicht erfasste Lücken kleiner als eine minimale Objektgröße enthält, wird das Objekt in jedem Fall bis zum Erreichen des Schutzfeldes erfassen, je nach Position auch schon vorher.

Die Vorrichtung kann vorzugsweise als integriertes System aus einer Kette von Sensoren mit einfachen integrierten Sensormodulen und einer zentralen Auswerteeinheit realisiert werden.

Soll das Teil aus einem statischen bewegungslosen Zustand heraus bewegt werden, kann es vorkommen, dass ggf. bereits ein Objekt im Schutzbereich vorhanden ist, jedoch dies nicht detektiert werden kann, da sich dieses Objekt zwischen den Detektionsstrahlen befindet. Hier kann es beispielsweise optional vorgesehen sein, dass das Teil aus dem Stand heraus zunächst mit einer geringen ungefähren Geschwindigkeit bewegt wird, bis sichergestellt ist, dass sich kein Objekt im Schutzfeld befindet.

Der spitze Winkel α beträgt vorzugsweise nur wenige Grad. Beispielsweise 1° bis 20°, oder 1° bis 10° oder 1° bis 5°. Der spitze Winkel α ist dabei bevorzugt in einem Winkel zu einer Seitenfläche des Fahrzeuges ausgerichtet.

Der Winkel ist dabei abhängig von dem parallelen Abstand der Detektionsstrahlen bzw. dem Abstand der Sensoren und der Länge des Überwachungsbereiches. Weiter ist der Abstand der Sensoren abhängig von der zu detektierenden Objektgröße.

Der Winkel ergibt sich optional aus der folgenden Gleichung:

$$\tan \alpha = \text{Abstand der Sensoren/Länge des Überwachungsbereiches in Bewegungsrichtung}$$

Gemäß einer Weiterbildung der Erfindung ist der Winkel der Sensoren einstellbar. D. h. beispielsweise je nach Länge des gewünschten Überwachungsbereiches kann der Winkel vergrößert oder verkleinert werden. Je kleiner der Überwachungsbereich in Fahrtrichtung ist, desto größer ist der Winkel α. Der Winkel α kann beispielsweise dynamisch verändert werden, um unterschiedlich lange Überwachungsbereiche einzustellen.

Gemäß der Erfindung ist das bewegliche Teil ein führerloses Transportfahrzeug, wobei die Bewegung die Fahrzeugbewegung ist und die Bewegungsrichtung die Fahrzeugbewegungsrichtung ist.

Gemäß dieser Ausbildung ist es möglich, vor dem Fahrzeug ein Schutzfeld mit einfachen Mitteln zu realisieren.

Die Sensoren können beispielsweise an einer Seite des Fahrzeugs in Fahrtrichtung angeordnet sein. Jedoch können auch mehrere Seiten oder auch alle Seiten des Fahrzeuges mit den Sensoren ausgebildet sein. Insbesondere wenn sich das Fahrzeug in alle Richtungen bewegen kann und insbesondere auch ein Rückwärtsfahren möglich sein soll, sind Sensoren insbesondere an der Rückseite und an den Seitenwänden des Fahrzeuges vorgesehen.

Gemäß der Erfindung sind die Sensoren Lichtlaufzeitsensoren. Ein Lichtlaufzeitsensor bzw. ein Distanzsensor bzw. ein Lichttaster nach dem Lichtlaufzeitprinzip weist mindestens einen Lichtsender auf, der aufeinanderfolgende Lichtimpulse in einen Messbereich bzw. Überwachungsbereich aussendet und mindestens einen Lichtempfänger, welcher die an einem Objekt im Messbereich zurückgeworfenen Lichtimpulse aufnimmt und in Form von elektrischen Empfangssignalen einer Steuer- und Auswerteeinheit zuführt, die unter Berücksichtigung der Lichtgeschwindigkeit aus der Zeit zwischen Aussendung und Empfang des Lichtimpulses ein für den Abstand des Objektes zum Lichttaster repräsentatives Abstandssignal ermittelt.

Gemäß einer bevorzugten Ausführungsform weist ein Lichtempfänger des Distanzsensors mindestens ein Array aus Einzelphotonenlawinendioden auf.

Einzelphotonenlawinendioden werden auch synonym als ‚Single Photon Avalanche Diode' kurz SPAD bezeichnet. Andere gängige Bezeichnungen sind ‚Silicon Photomultiplier' (SiPM), 'Geigermode Avalanche Photon Diode' oder 'Single Photon Counting Diode'. Einzelphotonenlawinendioden sind in Standard CMOS-Technologie realisierbare photoempfindliche Detektoren, die ähnlich wie Avalanche Photodioden einfallende Photonen in Strompulse konvertieren. Im Gegensatz zu Avalanche Photodioden werden Einzelphotonenlawinendioden jedoch über einer Durchbruchsspannung betrieben. Damit löst bereits ein einzelnes einfallendes Photon einen Lawineneffekt aus, der als Strompuls detektiert werden kann. Aufgrund der hohen Sensitivität, nämlich einem Verstärkungsfaktor von $10^6$ können bereits geringste Empfangsleistungen bis zu Einzelphotonen detektiert werden.

Eine Verwendung eines Lichtlaufzeitsensors, insbesondere die Verwendung von Einzelphotonenlawinendioden in Kombination mit Pulslasern liefern Abstandsinformationen mit einer Genauigkeit von beispielsweise bis zu ca. einem Millimeter. Gleichzeitig erlaubt eine einfache Vorsatzoptik über eine Fokussierung die Realisierung von guter Ortsselektivität und Abgrenzung gegenüber Störlicht.

Zur Entfernungsmessung sind verschiedene Lichtlaufzeitverfahren mit einer entsprechenden Auswertung implementierbar.

Es kann ein Pulsverfahren vorgesehen sein. Beispielsweise sind ein oder mehrere Zeit-zu-Digital-Konverter (time-to-digital-converter) für das Pulsverfahren vorgesehen, in dem jedes Einzelphotonenereignis mit einem Zeitstempel versehen wird. Bei einem Nutzsignal treten daher mehrere Zeitstempel korreliert auf. Die Messwertgenerierung erfolgt statistisch. Hintergrundlicht erzeugt hingegen zufällig verteilte Zeitstempel.

Weiter kann ein CW-Verfahren (Continuous Wave) bzw. das synonyme Dauerstrich-Verfahren eingesetzt werden, wobei ein zeitlich durchgängig moduliertes Lichtsignal eingesetzt wird. Bei diesem Verfahren werden über ein Gating-Signal die Einzelphotonenevents in zwei Zähler verteilt und aus dem Verhältnis der Zählerstände eine Phase berechnet.

Weiter können analoge Signale des Einzelphotonendiodenarrays ausgewertet werden. Diese werden mit einem Schwellwert verglichen, werden gesampelt oder werden mit statistischen Methoden ausgewertet.

Bei der Auswertung nach dem Lichtlaufzeitverfahren kann zusätzlich zum Abstandswert auch ein Amplitudenwert generiert werden, z. B. durch ein Histogramm der Zeitstempel, durch eine Zählrate oder durch eine Spannungsamplitude bei einer analogen Auswertung. Durch den Amplitudenwert kann eine Plausibilitätsprüfung, insbesondere bei sicherheitstechnischen Anwendungen durchgeführt werden.

Die Verwendung von Einzelphotonenlawinendioden bietet folgende Vorteile: Einzelphotonenlawinendioden sind in einem Standard CMOS Prozess herstellbar. Damit ist der Lichttaster hoch integrierbar, z. B. als ASIC. Der Lichtsender, beispielsweise ein VSCEL, eine Laserdiode oder eine Leuchtdiode und die Steuer- und Auswerteeinheit bzw. eine getrennte Lichtsenderansteuerung sind ebenfalls auf dem Chip bzw. im Gehäuse integrierbar.

In Weiterbildung der Erfindung weisen die Sensoren gleichmäßige Abstände auf. Durch die gleichmäßigen Abstände der Sensoren und eine jeweils identische Winkelausrichtung der Detektionsstrahlen wird eine gleichmäßige Auflösung innerhalb des Schutzfeldes erreicht.

In Weiterbildung der Erfindung ist wenigstens ein Detektionsstrahl eines Sensors, der am Rand des Schutzfeldes angeordnet ist, in Richtung einer Bewegungsrichtung des Teils angeordnet. Dadurch wird der Rand des Schutzfeldes gegen seitliches Eindringen überwacht. Diese Detektionsstrahlen am Rand sind dabei ggf. nicht parallel zu den übrigen Lichtstrahlen angeordnet, sondern direkt in Bewegungsrichtung bzw. parallel zur Bewegungsrichtung angeordnet. Ein parallel zur Bewegungsrichtung angeordneter Detektionsstrahl kann an beiden gegenüberliegenden seitlichen Rändern des Schutzfeldes bzw. Überwachungsbereiches vorgesehen sein.

In Weiterbildung der Erfindung weisen die Sensoren eine Linienoptik auf, wodurch im Querschnitt ein linienförmiger Detektionsstrahl gebildet wird mit einer Ausdehnung quer zur Detektionsrichtung. Der Detektionsstrahl ist damit flächig ausgebildet, wodurch auch ein räumliches Schutzfeld ermöglicht wird. Beispielsweise ist die Fläche des Detektionsstrahls quer zum Winkel $\alpha$ ausgerichtet.

In Weiterbildung der Erfindung sind die Sensoren jeweils in mehreren beabstandeten Reihen angeordnet. Dadurch wird ein räumliches Schutzfeld bzw. ein räumlicher Überwachungsbereich gebildet. Dabei sind die Sensoren bevorzugt in gleichen Abständen angeordnet. Die Sensoren sind dabei ein einer Ebene quer zur Bewegungsrichtung angeordnet, wobei die Detektionsstrahlen in einem spitzen Winkel zur Bewegungsrichtung des Teils angeordnet sind.

In Weiterbildung der Erfindung sind die Sensoren in mindestens zwei unterschiedlichen Richtungen angeordnet. Beispielsweise zeigen die Detektionsstrahlen von zwei jeweiligen Gruppen von Sensoren jeweils zueinander, so dass sich die Detektionsstrahlen kreuzen. Dabei sind die Winkel der Detektionsstrahlen zwar identisch, jedoch mit unterschiedlichen Winkelrichtungen bzw. mit unterschiedlichen Vorzeichen.

In Weiterbildung der Erfindung sind die Sensoren in einem gemeinsamen Gehäuse angeordnet. Dadurch können die Sensoren bereits in einem Gehäuse vormontiert bereitgestellt werden. Die im gemeinsamen Gehäuse vormontierten Sensoren können dann direkt an dem beweglichen Teil montiert werden. Dadurch wird eine Montage, beispielsweise an einem Fahrzeug oder einem beweglichen Maschinenteil, erleichtert.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Figur 1          eine Vorrichtung gemäß vorliegender Erfindung;

Figur 2 bis 3     ein Fahrzeug bzw. ein Teil mit Sensoren;

Figur 4 bis 5     ein Fahrzeug mit Sensoren in einer Frontansicht.

In den nachfolgenden Figuren sind identische Teile mit identischen Bezugszeichen versehen.

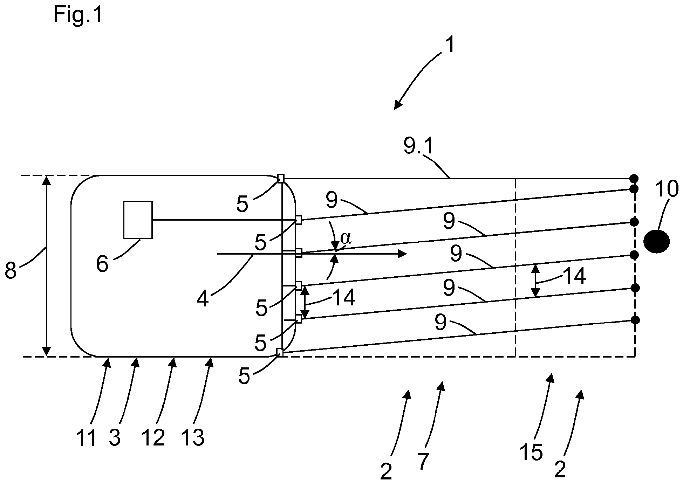

Figur 1 zeigt eine Vorrichtung 1 zum sicheren Überwachen eines Überwachungsbereichs 2 eines beweglichen Teils 3 bei einer Bewegung des Teils 3 in Bewegungsrichtung, mit mehreren Sensoren 5, und mit einer Auswerteeinheit 6 zum Auswerten der Sensoren 5, wobei die Sensoren 5 quer zur Bewegungsrichtung 4 beabstandet zueinander angeordnet sind, wobei die Sensoren 5 ein flächiges Schutzfeld 7 bilden, welches sich über die Breite 8 des Teils 3 erstreckt, wobei die Sensoren 5 berührungslos wirkende abstandsmessende Sensoren 5 sind, wobei die Sensoren 5 einen Detektionsstrahl 9 zum Erfassen von Objekten 10 im Überwachungsbereich 2 aufweisen und die Detektionsstrahlen 9 der Sensoren 5 in einem spitzen Winkel $\alpha$ zur Bewegungsrichtung 4 des Teils 3 angeordnet sind.

Gemäß Figur 1 ist das bewegliche Teil 3 ein Fahrzeug 11, insbesondere ein führerloses Transportfahrzeug 12, wobei die Bewegung die Fahrzeugbewegung ist und die Bewegungsrichtung 4 die Fahrzeugbewegungsrichtung ist.

Gemäß dieser Ausbildung ist es möglich, vor dem Fahrzeug 11 ein Schutzfeld 7 mit einfachen Mitteln zu realisieren.

Die Sensoren sind gemäß Figur 1 an einer Seite des Fahrzeugs 11 in Fahrtrichtung angeordnet. Jedoch können auch mehrere Seiten oder auch alle Seiten des Fahrzeuges 11 mit den Sensoren 5 ausgebildet sein. Insbesondere wenn sich das Fahrzeug 11 in alle Richtungen bewegen kann und insbesondere auch ein Rückwärtsfahren möglich sein soll, sind Sensoren 5 insbesondere an der Rückseite und an den Seitenwänden des Fahrzeuges 11 vorgesehen.

Gemäß Figur 1 kann das bewegliche Teil 3 auch ein Maschinenteil 13 sein, wobei die Bewegung die Maschinenteilbewegung ist und die Bewegungsrichtung die Maschinenteilbewegungsrichtung ist.

Insbesondere wenn das Maschinenteil 13 nur eine geradlinige Bewegung durchführt, können die Sensoren 5 in Bewegungsrichtung 4 angeordnet werden, so dass die Detektionsstrahlen 9 der Sensoren 5 in einem spitzen Winkel $\alpha$ zur Bewegungsrichtung 4 des Teils 3 angeordnet sind.

Bei dem Maschinenteil 13 kann es sich beispielsweise um einen Maschinenschlitten handeln, in dessen Bewegungsrichtung 4 die Sensoren 5 angeordnet sind.

Die Überwachung erfolgt gemäß Figur mit einer Anzahl einfacher, eindimensional tastender Distanzmesssensoren unter Ausnutzung der Bewegung des Fahrzeugs 11 und einer Ausrichtung der Sensoren 5, bei der die Tastrichtung in einem Winkel $\alpha$ zur Bewegungsrichtung 4 des Fahrzeugs 11 steht.

Durch die Detektionsstrahlen 9 der Sensoren 5 wird ein Schutzfeld 7 gebildet und vor dem Schutzfeld 7 eine Bremszone 15. Die Detektionsstrahlen 9 sind dabei parallel zueinander angeordnet.

Aufgrund des Winkels $\alpha$ zwischen Detektionsstrahl 9 und Bewegungsrichtung 4 verschiebt sich der Detektionsstrahl 9 bei Annäherung des Fahrzeugs 11 seitlich relativ zu einem statischen Objekt 10 im Überwachungsbereich 2.

Vom Eintreten eines Objektes 10 in die Bremszone 15 bis zum Erreichen des Schutzfeldes 7 wird je nach Neigungswinkel $\alpha$ ein Lateralbereich vom Detektionsstrahl 9 überstrichen.

Die Anordnung von Detektionsstrahlen 9, die innerhalb des Bewegungsweges, der der Länge der Bremszone 15 entspricht, einen Lateralbereich überstreicht, der höchstens noch nicht erfasste Lücken kleiner als eine minimale Objektgröße enthält, wird das Objekt 10 in jedem Fall bis zum Erreichen des Schutzfeldes 7 erfassen, je nach Position auch schon vorher. Das ist in den Figuren 1 bis 3 dargestellt.

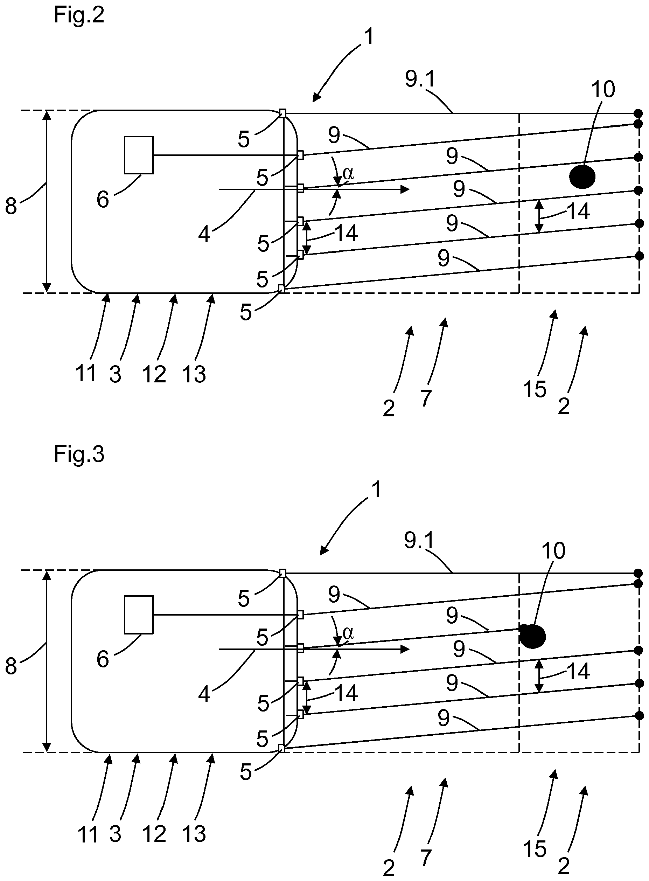

In Figur 1 befindet sich das Objekt noch vor der Bremszone 15. In Figur 2 befindet sich das Objekt 10 aufgrund der Bewegung des Fahrzeugs 11 bereits zwischen den Detektionsstrahlen 9 der Bremszone 15. Jedoch wird das Objekt 10 gemäß Figur 2 noch nicht von den Detektionsstrahlen 9 erfasst. Gemäß Figur 3 befindet sich das Objekt 10 aufgrund einer weiter fortgeschrittenen Bewegung des Fahrzeugs 11 im Detektionsbereich eines Sensors 5 innerhalb des Detektionsstrahles 9, sodass das Objekt 10 detektiert wird und die Auswerteeinheit 6 das Fahrzeug 11 abbremst und/oder stoppt. Es kann auch vorgesehen sein, dass das Fahrzeug 11 dem Objekt 10 ausweicht.

Der spitze Winkel $\alpha$ ist abhängig von dem parallelen Abstand 14 der Detektionsstrahlen 9 bzw. dem Abstand 14 der Sensoren 5 und der Länge des Überwachungsbereiches 2. Weiter ist der Abstand 14 der Sensoren 5 abhängig von der zu detektierenden Objektgröße. Beispielsweise beträgt der Winkel 1° bis 20°, oder 1° bis 10° oder 1° bis 5°.

Der Winkel $\alpha$ ergibt sich optional aus der folgenden Gleichung:

$$\tan\alpha = \text{Abstand 14 der Sensoren 5/Länge des Überwachungsbereiches 2 in Bewegungsrichtung 4}$$

Gemäß Figur 1 ist der Winkel $\alpha$ der Sensoren 5 optional einstellbar. D. h. beispielsweise je nach Länge des gewünschten Überwachungsbereiches 2 kann der Winkel $\alpha$ vergrößert oder verkleinert werden. Je kleiner der Überwachungsbereich 2 in Fahrtrichtung ist, desto größer ist der Winkel $\alpha$. Der Winkel $\alpha$ kann beispielsweise dynamisch verändert werden, um unterschiedlich lange Überwachungsbereiche 2 einzustellen.

Gemäß Figur 1 sind die Sensoren 5 Lichtlaufzeitsensoren.

Gemäß Figur 1 weisen die Sensoren 5 gleichmäßige Abstände 14 auf. Durch die gleichmäßigen Abstände 14 der Sensoren 5 und eine jeweils identische Winkelausrichtung der Detektionsstrahlen 9 wird eine gleichmäßige Auflösung innerhalb des Schutzfeldes 7 bzw. der Bremszone 15 erreicht.

Gemäß Figur 1 ist wenigstens ein Detektionsstrahl 9.1 eines Sensors 5 am Rand des Schutzfeldes 7 in Richtung einer Bewegungsrichtung 4 des Fahrzeuges 11 angeordnet. Dadurch wird der Rand des Schutzfeldes 7 gegen seitliches Eindringen von Objekten überwacht.

Dieser Detektionsstrahl 9.1 am Rand ist dabei nicht parallel zu den übrigen Lichtstrahlen 9 angeordnet, sondern direkt in Bewegungsrichtung 4 bzw. parallel zur Bewegungsrichtung 4 angeordnet.

Ein parallel zur Bewegungsrichtung 4 angeordneter Detektionsstrahl 9.1 kann an beiden gegenüberliegenden seitlichen Rändern des Schutzfeldes 7 bzw. Überwachungsbereichs 2 vorgesehen sein.

Gemäß einer nicht dargestellten Ausführungsform weisen die Sensoren 5 eine Linienoptik auf, wodurch im Querschnitt ein linienförmiger Detektionsstrahl 9 gebildet wird mit einer Ausdehnung quer zur Detektionsrichtung. Der Detektionsstrahl 9 ist damit flächig ausgebildet, wodurch auch ein räumliches Schutzfeld 7 bzw. räumlicher Überwachungsbereich 2 ermöglicht wird. Beispielsweise ist die Fläche des Detektionsstrahls 9 quer zum Winkel $\alpha$ ausgerichtet.

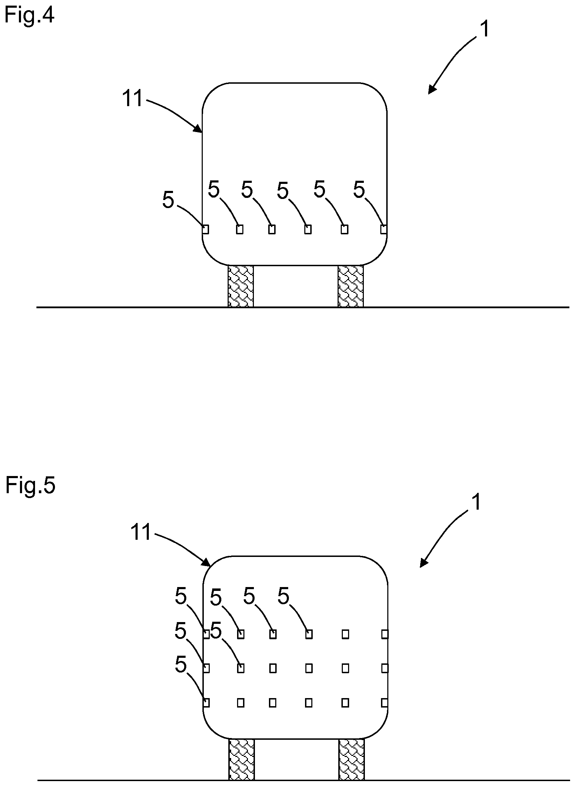

Figur 4 zeigt das Fahrzeug 11 aus den Figuren 1 bis 3 in einer Frontansicht mit den Sensoren 5.

Figur 5 zeigt ein Fahrzeug 11 gemäß einer weiteren Ausführungsform in einer Frontansicht. Gemäß Figur 5 sind die Sensoren 5 jeweils in mehreren beabstandeten Reihen angeordnet. Dadurch wird ein räumlicher Überwachungsbereich bzw. ein räumliches Schutzfeld gebildet. Dabei sind die Sensoren 5 bevorzugt in gleichen Abständen angeordnet. Die Sensoren 5 sind dabei in einer Ebene quer zur Bewegungsrichtung angeordnet, wobei die Detektionsstrahlen in einem spitzen Winkel zur Bewegungsrichtung des Teils angeordnet sind.

Gemäß einer nicht dargestellten Ausführungsform sind die Sensoren in mindestens zwei unterschiedlichen Richtungen angeordnet. Dabei zeigen die Detektionsstrahlen von zwei jeweiligen Gruppen von Sensoren jeweils zueinander, so dass sich die Detektionsstrahlen kreuzen. Dabei sind die Winkel der Detektionsstrahlen zwar identisch, jedoch mit unterschiedlichen Winkelrichtungen bzw. mit unterschiedlichen Vorzeichen.

Gemäß einer nicht dargestellten Ausführungsform sind die Sensoren in einem gemeinsamen Gehäuse angeordnet. Dadurch können die Sensoren bereits in einem Gehäuse vormontiert bereitgestellt werden. Die im gemeinsamen Gehäuse vormontierten Sensoren können dann direkt an dem beweglichen Teil montiert werden. Dadurch wird eine Montage, beispielsweise an einem Fahrzeug oder einem beweglichen Maschinenteil erleichtert.

Bezugzeichen:

1 Vorrichtung
2 Überwachungsbereich
3 bewegliches Teil
4 Bewegungsrichtung
5 Sensoren
6 Auswerteeinheit
7 Schutzfeld
8 Breite des Teils
9, 9.1 Detektionsstrahl
10 Objekte
11 Fahrzeug
12 führerloses Transportfahrzeug
13 Maschinenteil
14 Abstand
15 Bremszone
16 Gehäuse
α spitzer Winkel

**Patentansprüche**

1. Vorrichtung zum sicheren Überwachen eines Überwachungsbereichs (2) eines beweglichen Teils (3) bei einer Bewegung des Teils (3) in Bewegungsrichtung (4), mit mehreren Sensoren (5), und mit einer Auswerteeinheit (6) zum Auswerten der Sensoren (5),
   wobei die Sensoren (5) quer zur Bewegungsrichtung (4) beabstandet zueinander angeordnet sind,
   wobei die Sensoren (5) ein flächiges Schutzfeld (7) bilden, welches sich über die Breite des Teils (3) erstreckt,
   wobei die Sensoren (5) berührungslos wirkende abstandsmessende Sensoren sind,
   wobei die Sensoren (5) einen Detektionsstrahl (9) zum Erfassen von Objekten (10) im Überwachungsbereich (2) aufweisen,
   **dadurch gekennzeichnet, dass**
   die Detektionsstrahlen (9) der Sensoren (5) in einem spitzen Winkel α zur Bewegungsrichtung (4) des Teils (3) angeordnet sind, wobei die Sensoren (5) Lichtlaufzeitsensoren sind, wobei das bewegliche Teil (3) ein führerloses Transportfahrzeug (12) ist, wobei die Bewegung die Fahrzeugbewegung ist und die Bewegungsrichtung die Fahrzeugbewegungsrichtung ist.

2. Vorrichtung nach mindestens einem der vorhergehenden Ansprüche, **dadurch gekennzeichnet, dass** die Sensoren (5) gleichmäßige Abstände (14) aufweisen.

3. Vorrichtung nach mindestens einem der vorhergehenden Ansprüche, **dadurch gekennzeichnet, dass** wenigstens ein Detektionsstrahl (9) eines Sensors (5), der am Rand des Schutzfeldes (7) angeordnet ist, in Richtung einer Bewegungsrichtung (4) oder parallel zur Bewegungsrichtung des Teils (3) angeordnet ist.

**4.** Vorrichtung nach mindestens einem der vorhergehenden Ansprüche, **dadurch gekennzeichnet, dass** die Sensoren (5) eine Linienoptik aufweisen, wodurch im Querschnitt ein linienförmiger Detektionsstrahl (9) gebildet wird mit einer Ausdehnung quer zur Detektionsrichtung.

**5.** Vorrichtung nach mindestens einem der vorhergehenden Ansprüche, **dadurch gekennzeichnet, dass** die Sensoren jeweils in mehreren beabstandeten Reihen angeordnet sind.

**6.** Vorrichtung nach mindestens einem der vorhergehenden Ansprüche, **dadurch gekennzeichnet**, das die Sensoren (5) in mindestens zwei unterschiedlichen Richtungen angeordnet sind.

**7.** Vorrichtung nach mindestens einem der vorhergehenden Ansprüche, **dadurch gekennzeichnet, dass** die Sensoren (5) in einem gemeinsamen Gehäuse (16) angeordnet sind.

**Claims**

**1.** An apparatus for the secure monitoring of a monitored zone (2) of a moving part (3) on a movement of the part (3) in the direction of movement (4) having a plurality of sensors (5) and having an evaluation unit (6) for evaluating the sensors (5),
wherein the sensors (5) are arranged spaced apart from one another transversely to the direction of movement (4);
wherein the sensors (5) form an areal protected field (7) that extends over the width of the part (3);
wherein the sensors (5) are contactlessly acting distance-measuring sensors; and
wherein the sensors (5) have a detection beam (9) for detecting objects (10) in the monitored zone (2),
**characterized in that**
the detection beams (9) of the sensors (5) are arranged at an acute angle $\alpha$ with respect to the direction of movement (4) of the part (3), with the sensors (5) being time of flight sensors; with the moving part (3) being a driverless transport vehicle (12); and with the movement being the vehicle movement and the direction of movement being the direction of movement of the vehicle.

**2.** An apparatus in accordance with the preceding claim, **characterized in that** the sensors (5) have uniform intervals (14).

**3.** An apparatus in accordance with at least one of the preceding claims, **characterized in that** at least one detection beam (9) of a sensor (5) that is arranged at the margin of the protected field (7) is arranged in the direction of a direction of movement (4) or in parallel with the direction of movement of the part (3).

**4.** An apparatus in accordance with at least one of the preceding claims, **characterized in that** the sensors (5) have a line optics, whereby a linear detection beam (9) having an extent transverse to the direction of detection is formed in cross-section.

**5.** An apparatus in accordance with at least one of the preceding claims, **characterized in that** the sensors are each arranged in a plurality of spaced apart rows.

**6.** An apparatus in accordance with at least one of the preceding claims, **characterized in that** the sensors (5) are arranged in at least two different directions.

**7.** An apparatus in accordance with at least one of the preceding claims, **characterized in that** the sensors (5) are arranged in a common housing (16).

**Revendications**

**1.** Dispositif de surveillance sécurisée d'une zone à surveiller (2) d'un élément mobile (3) pendant un mouvement de l'élément (3) en direction de mouvement (4), comportant plusieurs capteurs (5) et une unité d'évaluation (6) pour évaluer les capteurs (5),
dans lequel les capteurs (5) sont agencés en étant espacés transversalement à la direction de mouvement (4),
les capteurs (5) constituent un champ de protection surfacique (7) qui s'étend sur la largeur de l'élément (3),
les capteurs (5) sont des capteurs télémétriques agissant sans contact physique,

les capteurs (5) présentent un faisceau de détection (9) pour détecter des objets (10) dans la zone à surveiller (2), **caractérisé en ce que**

les faisceaux de détection (9) des capteurs (5) sont agencés sous un angle aigu $\alpha$ par rapport à la direction de mouvement (4) de l'élément (3), les capteurs (5) étant des capteurs du temps de vol de lumière, l'élément mobile (3) étant un véhicule de transport (12) sans conducteur, le mouvement étant le mouvement du véhicule et la direction de mouvement étant la direction de mouvement du véhicule.

2. Dispositif selon la revendication précédente, **caractérisé en ce que** les capteurs (5) présentent des distances régulières (14).

3. Dispositif selon l'une au moins des revendications précédentes, **caractérisé en ce que** au moins un faisceau de détection (9) d'un capteur (5) agencé au bord du champ de protection (7) est agencé en direction d'une direction de mouvement (4) ou parallèlement à la direction de mouvement de l'élément (3).

4. Dispositif selon l'une au moins des revendications précédentes, **caractérisé en ce que** les capteurs (5) présentent une optique en ligne dont résulte, en section transversale, un faisceau de détection (9) de forme linéaire avec une extension transversale à la direction de détection.

5. Dispositif selon l'une au moins des revendications précédentes, **caractérisé en ce que** les capteurs sont agencés respectivement dans plusieurs rangées espacées.

6. Dispositif selon l'une au moins des revendications précédentes, **caractérisé en ce que** les capteurs (5) sont agencés dans au moins deux directions différentes.

7. Dispositif selon l'une au moins des revendications précédentes, **caractérisé en ce que** les capteurs (5) sont agencés dans un boîtier commun (16).

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005049159 A1
- DE 19512681 A1